# EUROPÄISCHE PATENTANMELDUNG

(11) **EP 2 093 167 A1**
(43) Veröffentlichungstag der Anmeldung: **26.08.2009**
(21) Anmeldenummer: 08003183.4
(22) Anmeldetag: 21.02.2008
(51) Int. Cl.: B65G 1/04, B65G 1/137

(54) **Speichervorrichtung**

(71) Anmelder: Bargstedt Handlingsysteme GmbH, 21745 Hemmoor (DE)
(72) Erfinder: Peisker, Torsten, Dr., 21709 Himmelspforten (DE)
(74) Vertreter: HOFFMANN EITLE

(57) **Zusammenfassung**

Die Erfindung betrifft eine Speichervorrichtung (1) für bevorzugt plattenförmige Werkstücke (2), umfassend: eine Einfördereinrichtung (10) zum Einfördern und Bereithalten von Werkstücken (2), eine Ausfördereinrichtung (20) zum Ausfördern von Werkstücken (20), eine Speichereinrichtung (30), die eine Mehrzahl von auf unterschiedlichen Ebenen angeordneten Speicherabschnitten (32) aufweist, und eine Hubeinrichtung (40) zum Bewegen von Werkstücken (2) zwischen der Einfördereinrichtung (10) und der Speichereinrichtung (30) sowie zwischen der Speichereinrichtung (30) und der Ausfördereinrichtung (20). Die erfindungsgemäße Speichervorrichtung ist dadurch gekennzeichnet, dass die Einfördereinrichtung (10) mindestens zwei Einförderebenen (12, 14, 16) aufweist, auf denen sie Werkstücke (2) einfördern und/oder bereithalten kann.

## Beschreibung

### Technisches Gebiet

Die Erfindung betrifft eine Speichervorrichtung für bevorzugt plattenförmige Werkstücke nach dem Oberbegriff von Anspruch 1.

### Stand der Technik

Im Bereich der Verarbeitung plattenförmiger Werkstücke wie beispielsweise in der Möbel- oder Bauelementeproduktion besteht zunehmen Nachfrage nach kundenindividueller Fertigung ("Stückzahl-1-Fertigung"). Hierbei werden die Werkstücke zunächst aus größeren Rohlingen herausgesägt und anschließend einer Weiterbearbeitung zugeführt, beispielsweise einer Kantenbearbeitung. Zur Minimierung des Verschnitts befinden sich die Werkstücke nach dem Zusägen jedoch in einer chaotischen Reihenfolge und müssen daher spätestens vor dem Verpacken oder Verbinden in eine gewünschte Reihenfolge gebracht werden, die beispielsweise zum stabilen Stapeln der Werkstücke eines späteren Möbelstücks ausgelegt ist. Dabei kann es vorkommen, dass zusammengehörige, plattenförmige Werkstücke aus einem Werkstückstrom mit mehreren Hundert Teilen ausgewählt werden müssen.

Zu diesem Zweck werden neben einem manuellen Sortieren Sortieranlagen eingesetzt. So offenbart beispielsweise die DD 224 830 A1 eine Vorrichtung zur gesteuerten Beschickung von Produktionsanlagen. Die Vorrichtung besitzt einen rotierenden Fächerspeicher, der durch ein Förderband beschickt wird und je nach Drehstellung ein bestimmtes Werkstück an ein nachfolgendes Förderband abgibt. Allerdings hat sich gezeigt, dass die Kapazität eines derartigen Speichers begrenzt ist und der Zeitaufwand zum Verdrehen des Speichers zwischen den verschiedenen Beschickungs- und Abgabestellungen erheblich ist.

Darüber hinaus ist der Anmelderin durch eigene, interne Vorbenutzung eine Speichervorrichtung nach dem Oberbegriff von Anspruch 1 bekannt. Dieser sogenannte Vertikalsortierspeicher basiert auf zeilenweise übereinander angeordneten Speicherfächern und einem Hubrechen, wobei die Werkstücke mittels des Rechens von einem Einlaufflächentransport aufgenommen und in ein leeres Speicherfach abgelegt werden. Auszulagernde Teile werden mit dem Rechen aus dem Speicherfach entnommen und auf einen Auslaufflächentransport abgelegt. Der bekannte Vertikalsortierspeicher weist trotz geringer Dynamik eine hohe Speicherkapazität auf. Allerdings kann er die oben genannten Anforderungen zur Ausgabe der Werkstücke in einer gewünschten Reihenfolge nicht oder nur mit hohem zeitlichem und verfahrenstechnischem Aufwand erfüllen.

### Darstellung der Erfindung

Es ist Aufgabe der Erfindung, eine Speichervorrichtung für bevorzugt plattenförmige Werkstücke bereitzustellen, die auf einfache und zügige Weise ermöglicht, die Werkstücke in einer gewünschten Reihenfolgen abzugeben.

Diese Aufgabe wird erfindungsgemäß durch eine Speichervorrichtung nach Anspruch 1 und ein Verfahren nach Anspruch 11 gelöst. Besonders bevorzugte Weiterbildungen der Erfindung sind in den abhängigen Ansprüchen angegeben.

Der Erfindung liegt der Gedanke zugrunde, die Werkstücke bereits beim Einfördern und Einlegen in die Speichereinrichtung in eine bestimmte Reihenfolge zu bringen, auch wenn diese noch nicht vollständig der abschließend gewünschten Reihenfolge entsprechen muss. Vor diesem Hintergrund ist erfindungsgemäß vorgesehen, dass bei einer gattungsgemäßen Speichervorrichtung die Einfördereinrichtung mindestens zwei Einförderebenen aufweist, auf denen sie Werkstücke einfördern und/oder bereithalten kann.

Auf diese Weise wird es möglich, die Werkstücke bereits beim Einfördern in zwei oder mehr Stränge aufzuteilen, und zwar unter Berücksichtigung der gewünschten Reihenfolge der Werkstücke bzw. unter Berücksichtigung der Attribute der Werkstücke wie insbesondere deren Geometrie. Diese Stränge können dann in kleineren oder größeren Gruppen mittels der Hubeinrichtung in den Speicherabschnitten der Speichereinrichtung abgelegt werden. Dies kann durch die gruppenweise Handhabung einfach und zügig bzw. mit hoher Kapazität erfolgen. Im Ergebnis liegen die Werkstücke bereits gruppenweise in einer bestimmten Reihenfolge in der Speichereinrichtung, so dass auch ein gruppenweiser und somit einfacher und zügiger Ausfördervorgang durchgeführt werden kann.

Diese Vorteile lassen sich im Stand der Technik nicht realisieren, da beispielsweise bei lagenweisem Umsetzen der Werkstücke in und aus der Speichereinrichtung keine bestimmte Reihenfolge erzeugt werden kann, während bei einem einzelnen Umsetzen der Werkstücke die heutigen Kapazitätsanforderungen, die beispielsweise für die Einbindung der Speichervorrichtung in eine Maschinenstraße benötigt werden, nicht erfüllt werden können.

Die Ausgestaltung der Einfördereinrichtung mit mehreren Einförderebenen kann im Rahmen der vorliegenden Erfindung auf unterschiedlichste Art und Weise erfolgen. Gemäß einer Weiterbildung der Erfindung ist jedoch vorgesehen, dass die Einfördereinrichtung mindestens zwei Einförderflächentransporte aufweist, beispielsweise in der Form von Rollenbahnen, Transportriemen oder dergleichen. Hierdurch ergibt sich ein besonderes kontinuierlicher und störungsfreier Betrieb und eine klare Aufteilung der Einförderebenen in separate Stränge. Dabei ist es besonders bevorzugt, dass die Einförderflächentransporte unabhängig voneinander betrieben werden können, sodass sich besonders vielfältige und präzise Möglichkeiten ergeben, die Werkstücke bereits möglichst weitgehend auf den Einförderflächentransporten in die gewünschte Sortierreihenfolge zu bringen.

Innerhalb dieses Konzepts ist es gemäß einer Weiterbildung der Erfindung vorgesehen, dass die Speichervorrichtung ferner eine Weicheneinheit aufweist, die eingerichtet ist, von einer vorgelagerten Fördereinrichtung kommende Werkstücke einer der Einförderflächentransporte zuzufördern. Hierdurch ergibt sich eine zielgenaue und effektive Zuordnung und Sortierung der Werkstücke bei einfacher Konstruktion und hoher Zuverlässigkeit.

Alternativ oder zusätzlich zu einem Vorsehen mehrerer Einförderflächentransporte ist gemäß einer Weiterbildung der Erfindung vorgesehen, dass die Speichereinrichtung mindestens ein Aushebeelement aufweist, das eingerichtet ist, mindestens ein Werkstück von einer ersten Einförderebene anzuheben und in einer zweiten Einförderebene bereitzuhalten. Auf diese Weise kann die erfindungsgemäße Speichervorrichtung mit einem einzelnen Einförder-Flächentransport (bzw. einer verminderten Anzahl von Einförderflächentransporten) aus, da das mindestens eine Aushebeelement eine zusätzliche Einförderebene zum Bereithalten von Werkstücken ermöglicht, ohne selbst ein aktives Einförderelement zu sein. Hierdurch lassen sich die oben diskutierten, erfindungsgemäßen Vorteile mit besonders einfacher und kompakter Konstruktion sowie hoher Variabilität verwirklichen. Dabei ist zu beachten, dass im Rahmen der vorliegenden Erfindung vorteilhaft auch mindestens ein Aushebeelement im Bereich der Ausfördereinrichtung angeordnet sein kann.

Gemäß einer Weiterbildung der Erfindung ist jedoch vorgesehen, dass die Hubeinrichtung kann im Rahmen der vorliegenden Erfindung auf unterschiedlichste Art und Weise ausgestaltet sein. Dabei ist es besonders bevorzugt, dass die Hubeinrichtung eine Mehrzahl von Hubelementen aufweist, die gemeinsam oder einzeln eine Werkstückbewegung zwischen der Einfördereinrichtung und der Speichereinrichtung sowie zwischen der Speichereinrichtung und der Ausfördereinrichtung ausführen können.

Dabei ist es besonders bevorzugt, dass mehrere Hubelemente an einem gemeinsamen Schlitten angeordnet sind, der bevorzugt vertikal verfahrbar ist. Hierdurch lassen sich einfache Konstruktion und hohe Leistung sowie Variabilität vereinigen. Dabei ermöglicht eine Mehrzahl von Schlitten, die jeweils eine Mehrzahl von Hubelementen aufweisen, einen vorteilhaften Beitrag der Hubelemente zu einer hohen Kapazität und einer effektiven Sortierfunktion der erfindungsgemäßen Speichervorrichtung.

Ferner ist bei einer bevorzugten Ausführungsform dieses Konzepts vorgesehen, dass die Hubelemente mehrerer Schlitten auch synchron arbeiten können. Hierdurch wird es möglich, in der erfindungsgemäßen Speichervorrichtung auch sehr große Werkstücke zu handhaben, die dann gemeinsam durch die Hubelemente mehrerer Schlitten aufgenommen werden können.

Alternativ oder zusätzlich hierzu ist gemäß einer Weiterbildung der Erfindung vorgesehen, dass die Hubelemente einzeln oder gruppenweise ansteuerbar, insbesondere schwenkbar sind. Hierdurch ist die Hubeinrichtung in der Lage, unter Berücksichtigung der gewünschten Sortierreihenfolge sowie der Ist-Anordnung der Werkstücke auf der Einfördereinrichtung oder in der Speichereinrichtung jeweils eine Werkstückgruppe mit der zur Erzielung der gewünschten Sortierreihenfolge anwendbaren Größe aufzunehmen bzw. die Hubkapazität der Hubeinrichtung in jedem Hubtakt an die zur Erzielung der Sortierreihenfolge erforderlichen Randbedingungen anzupassen.

Gemäß einer Weiterbildung der Erfindung ist ferner vorgesehen, dass die Speichereinrichtung mehrere nebeneinander angeordnete Module aufweist, wobei jedem Modul mindestens ein Hubelement zugeordnet ist. Hierdurch lässt sich die erfindungsgemäße Speichervorrichtung variabel an die vielfältigsten Anforderungen anpassen, wie sie beispielsweise in unterschiedlichen Maschinenstraßen auftreten, während die Speichervorrichtung gleichzeitig dank der Zuordnung des jeweiligen Hubelements zu dem entsprechende Modul einen präzisen und variablen Betrieb ermöglicht.

Ein erfindungsgemäßes Verfahren zum Speichern und Sortieren von Werkstücken unter Einsatz einer erfindungsgemäßen Speichervorrichtung ist Gegenstand von Anspruch 11. Dieses zeichnet sich dadurch aus, dass die gewünschte Sortierreihenfolge bereits festgelegt wird bzw. bekannt ist, bevor die Werkstücke in die Speichervorrichtung eingefördert werden. Hierdurch kann der Teilefluss optimal gesteuert werden, sodass die Werkstücke mit einer minimalen Anzahl von Hubbewegungen eingespeichert und ausgespeichert werden können. Das Verfahren ermöglicht somit eine optimale Sortierfunktion bei maximaler Kapazität, sodass sich das Verfahren insbesondere für den Einsatz in Maschinenstraßen mit hoher Leistung eignet.

Bei einer Weiterbildung des erfindungsgemäßen Verfahrens ist vorgesehen, dass die Werkstücke gruppenweise von der Einfördereinrichtung in die Speichereinrichtung und/oder von der Speichereinrichtung in die Ausfördereinrichtung eingesetzt werden. Diese Maßnahme, die durch die Sortierfunktion des erfindungsgemäßen Verfahrens bzw. der erfindungsgemäßen Vorrichtung überhaupt erst ermöglicht wird, trägt zu einer weiteren Kapazitätssteigerung des erfindungsgemäßen Verfahrens bzw. der erfindungsgemäßen Vorrichtung bei.

### Kurze Beschreibung der Zeichnungen

- Fig. 1: zeigt schematisch eine Frontansicht einer bevorzugten Ausführungsform der erfindungsgemäßen Speichervorrichtung;
- Fig. 2: zeigt schematisch eine Seitenansicht der in Fig. 1 gezeigten Speichervorrichtung;
- Fig. 3: zeigt schematisch eine teilweise Draufsicht der in Fig. 1 gezeigten Speichereinrichtung;
- Fig. 4: zeigt schematisch eine teilweise Frontansicht einer weiteren Ausführungsform der erfindungsgemäßen Speichereinrichtung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

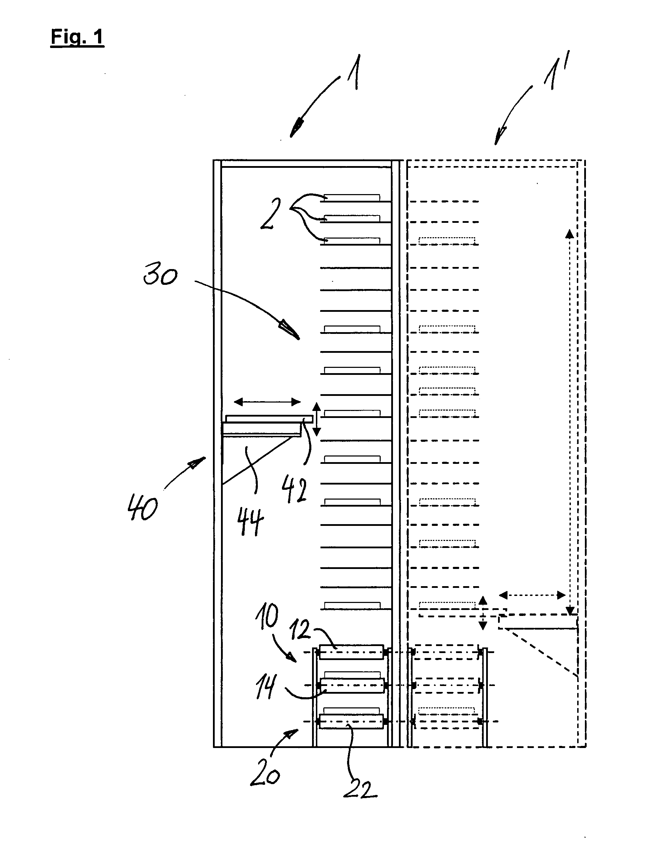

Eine Speichervorrichtung 1 als bevorzugte Ausführungsform der vorliegenden Erfindung ist schematisch in den Figuren 1 bis 3 dargestellt. Die Speichervorrichtung dient sowohl zum Speichern als auch zum Sortieren plattenförmiger Werkstücke 2, bei denen es sich beispielsweise um Werkstücke für die Möbel- oder Bauelementeindustrie handeln kann und die beispielsweise aus Holz-, Holzwerkstoffen, Kunststoff oder dergleichen bestehen können.

Die Speichervorrichtung 1 besitzt zunächst eine Einfördereinrichtung 10 zum Einfördern und Bereithalten der Werkstücke 2, die in der vorliegenden Ausführungsform zwei Einförderflächentransporte 12, 14 aufweist. Die Einförderflächentransporte 12, 14 sind dabei als angetriebene Rollenbahnen ausgeführt, obgleich auch andersartige Konstruktionen wie beispielsweise Riemenförderer oder dergleichen zum Einsatz kommen können. Dabei sind die Einförderflächentransporte 12, 14 unabhängig voneinander betreibbar.

Stromaufwärts der Einförderflächentransporte 12, 14 ist eine Weicheneinheit 18 angeordnet, die eingerichtet ist, von einer vorgelagerten Fördereinrichtung 4 kommende Werkstücke 2 einem der Einförderflächentransporte 12, 14 zuzufördern. Dabei kann die Weiche 18 im einfachsten Falle durch eine vertikal verfahrbare Förderrolle ausgestaltet sein.

Darüber hinaus besitzt die Speichervorrichtung 1 eine Ausfördereinrichtung 20 zum Ausfördern von Werkstücken, die in der vorliegenden Ausführungsform ebenfalls als Rollenbahn 22 ausgebildet ist.

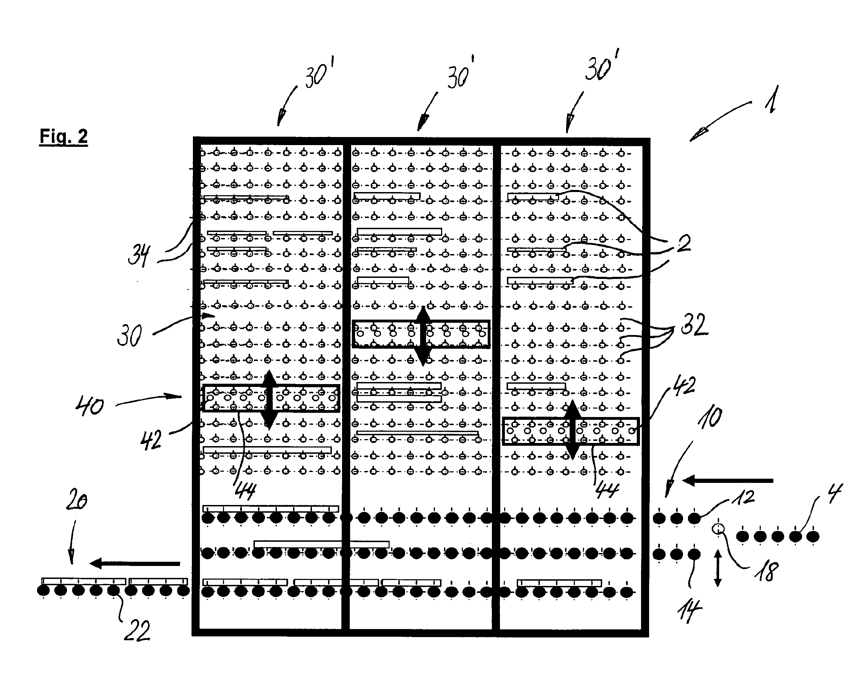

Wie in Fig. 1 am besten zu erkennen ist, weist die Speichervorrichtung 1 oberhalb der Rollenbahnen 12, 14, 22 eine Speichereinrichtung 30 auf, die durch eine Mehrzahl übereinander angeordneter Speicherabschnitte 32 gebildet ist. Die Ausbildung der Speicherabschnitte 32 ist in Fig. 2 am besten zu erkennen, die eine Mehrzahl "fliegend" aufgehängter bzw. auskragender Stäbe 34 zeigt, auf denen die jeweiligen Werkstücke abgelegt werden können.

Weiterhin besitzt die erfindungsgemäße Speichereinrichtung 1 eine Hubeinrichtung 40 zum Bewegen der Werkstücke 2 zwischen den Einförderflächentransporten 12, 14 und den Speicherfächern 32 sowie zwischen den Speicherfächern 32 und dem Ausförderflächentransport 22. Die Hubeinrichtung 40 weist in der vorliegenden Ausführungsform eine Mehrzahl vertikal verformbarer Schlitten 44 auf, die jeweils mehrere stabförmige Hubelemente 42 aufweisen, sodass sich eine rechenartige Einheit ergibt. Durch die rechenartige Ausgestaltung können die Hubelemente 42 zwischen den Ablagestäbe 34 hindurch greifen, um beispielsweise Werkstücke aufzunehmen oder abzulegen.

Darüber hinaus sind die Hubelemente 42, wie in Fig. 1 angedeutet, in ihrer Erstreckungsrichtung (von links nach rechts in Fig. 1) gegenüber dem Schlitten 44 verfahrbar, was ebenfalls dazu dient, Werkstücke aufzunehmen und abzulegen.

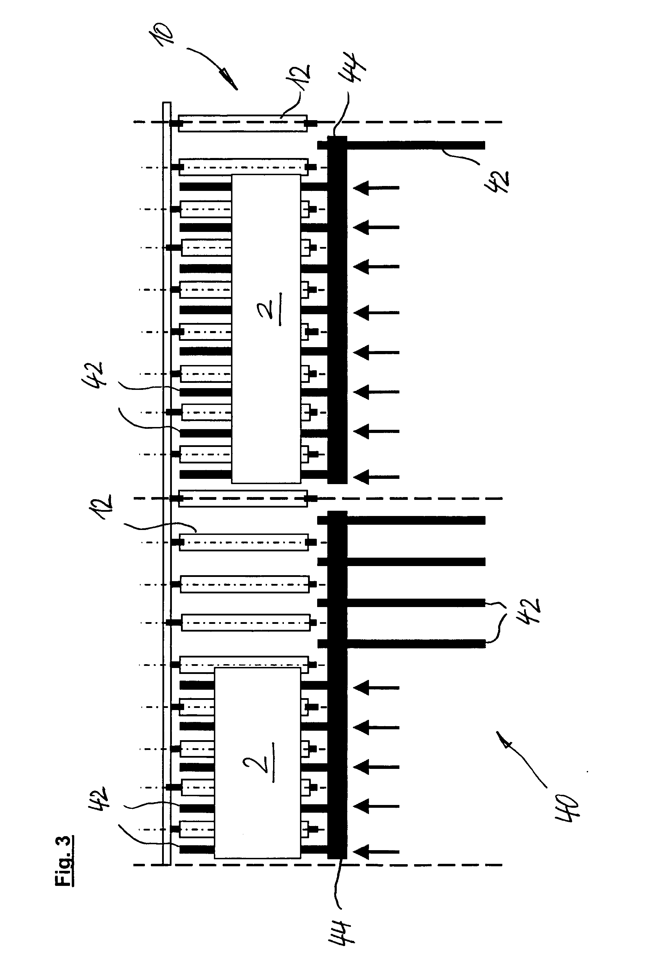

Eine bevorzugte Ausgestaltung der Hubeinrichtung 40 ist in Fig. 3 gezeigt, bei welcher die Hubelemente 42 einzeln oder gruppenweise ansteuerbar und schwenkbar sind. Dabei sind in Fig. 3 jeweils einige Hubelemente in einer Arbeitsstellung, in welcher sie das jeweilige Werkstück 2 von der Rollenbahn 12 anheben können, während die übrigen Hubelemente 42 in einer weg geschwenkten (in Fig. 3 nach unten gerichteten) Stellung sind, in welcher sie nicht an einem Hub- bzw. Umsetzvorgang teilnehmen können. Obgleich in Fig. 3 nicht gezeigt, können selbstverständlich auch alle an einem Schlitten 44 angeordneten Hubelemente an einem Hub- bzw. Umsetzvorgang mitwirken, und es können gegebenenfalls auch zwei Schlitten 44 synchron arbeiten, um mit ihren jeweiligen Hubelementen 42 gemeinsam ein oder mehrere Werkstücke umzusetzen.

Die Speichereinrichtung 30 ist in der vorliegenden Ausführungsform durch mehrere nebeneinander angeordnete Module 30' gebildet, wobei jedem Modul mindestens ein Hubelement 42 zuordnet ist (vgl. Fig. 1). Ferner ist die Speichervorrichtung in der vorliegenden Ausführungsform, wie in Fig. 1 am besten zu erkennen ist, als Doppelspeicher ausgeführt, der von zwei gegenüberliegenden Seiten mit Werkstücke beschickt werden kann. Zu diesem Zweck ist eine zusätzliche erfindungsgemäße Speichervorrichtung 1' vorgesehen, die in Fig. 1 gestrichelt dargestellt ist.

Der Betrieb der erfindungsgemäßen Vorrichtung 1 vollzieht sich beispielsweise wie folgt. Plattenförmige Werkstücke 2 werden beispielsweise in einer nicht näher gezeigten Säge- oder Fräsvorrichtung aus einer großformatigen Rohplatte zugeschnitten und als "chaotischer" Werkstückstrom auf der Fördereinrichtung 4 zugeführt. Ferner wird in einer nicht näher gezeigten Steuereinrichtung eine gewünschte Sortierreihenfolge der Werkstücke 2 festgelegt, die sich beispielsweise aus gewünschten Verpackungschargen, Kundenanforderungen oder dergleichen ergibt.

Unter Berücksichtigung der gewünschten Sortierreihenfolge werden die auf der Fördereinrichtung 4 ankommenden Werkstücke 2 unter Zuhilfenahme der Weiche 18 entweder dem Einförderflächentransport 12 oder dem Einförderflächentransport 14 zugewiesen und auf diesen in die Speichervorrichtung 1 eingefördert und dort bereitgehalten. Durch diesen Sortiervorgang kann bereits eine gruppenweise Vorsortierung der jeweiligen Werkstücke in die gewünschte Sortierreihenfolge erfolgen. Dabei ist es im Rahmen der vorliegenden Erfindung möglich, auch drei oder mehr Einförderflächentransporte vorzusehen, um einen verbesserten Sortiergrad zu erzielen.

Sobald eine gewünschte bzw. von der Steuereinrichtung auf der Grundlage der gewünschten Sortierreihenfolge festgelegte Werkstückgruppe auf einem der Einförderflächentransporte 12, 14 bereitgestellt ist, wird diese von der Hubeinrichtung 40 aufgenommen und in der Speichereinrichtung 30 abgelegt. Simultan hierzu werden weitere Werkstücke 2 eingefördert, sodass Hubeinrichtung 40 und Einfördereinrichtung 10 quasikontinuierlich und parallel zueinander arbeiten können. Ebenfalls simultan hierzu kann auch ein Ausfördern von in der Speichereinrichtung 30 gespeicherten Werkstücken bzw. bevorzugt Werkstückgruppen erfolgen. Hierzu kommt ebenfalls die Hubeinrichtung 40 zum Einsatz, die Werkstücke aus der Speichereinrichtung 30 aufnimmt und diese auf der Ausfördereinrichtung 20 ablegt, und zwar derart, dass die Werkstücke 2 auf der Ausfördereinrichtung 20 in der gewünschten und von der Steuereinrichtung festgelegten Sortierreihenfolge angeordnet sind.

Die beschriebenen Vorgänge des Einförderns, Umsetzens von der Einfördereinrichtung in die Speichereinrichtung sowie von der Speichereinrichtung auf die Ausfördervorrichtung und Ausförderns wiederholen sich kontinuierlich und, soweit möglich und erforderlich, auch simultan. Auf diese Weise dient die erfindungsgemäße Speichervorrichtung sowohl als Puffer als auch als Sortieranordnung, die in einer automatisierten Maschinenstraße eine tragende Rolle spielt, um eine verschnittoptimiert arbeitende Aufteileinrichtung mit einer nachgelagerten Verpackungs- oder Montagemaschine zu verknüpfen, die einen genau definierten Teilestrom benötigt.

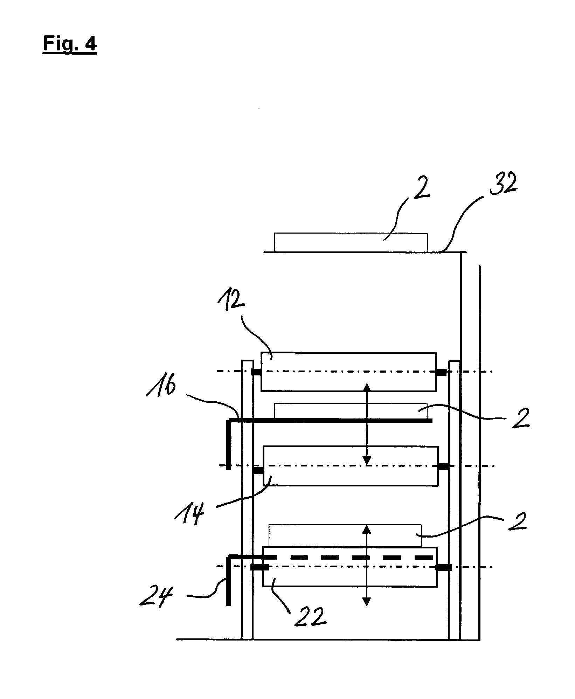

Eine teilweise Frontansicht einer zweiten bevorzugten Ausführungsform der erfindungsgemäßen Speichervorrichtung ist in Fig. 4 schematisch dargestellt. Diese unterscheidet sich von der vorstehend diskutierten, ersten Ausführungsform dadurch, dass sie zusätzlich Aushebeelemente 16 und 24 aufweist, die eingerichtet sind, mindestens ein Werkstück 2 von der Rollenbahn 14 bzw. 22 anzuheben und in einer darüber liegenden Ein- bzw. Ausförderebene bereitzuhalten. Auf diese Weise kann die Speichereinrichtung mit einer zusätzlichen Sortierebene ausgestattet werden, welche im Hinblick auf die Sortierfunktion die gleiche Wirkung besitzt wie eine zusätzliche Fördereinrichtung, und das bei einfacher und kompakter Bauweise. Dabei ist es im Rahmen der Erfindung ebenso möglich, obgleich in Fig. 4 nicht gezeigt, die gesamte Rollenbahn 12 wegzulassen und stattdessen nur mindestens ein Aushebeelement 16 vorzusehen.

Der Betrieb der zweiten Ausführungsform entspricht prinzipiell demjenigen der ersten Ausführungsform, wobei die Aushebeelemente 16 bzw. 24 keine Weichen oder dergleichen benötigen. Vielmehr sind die Aushebeelemente 16 bzw. 24 vertikal verfahrbar, sodass sie in der Abhängigkeit von der gewünschten Sortierreihenfolge und den Anweisungen der nicht gezeigten Steuereinrichtung Werkstücke von der zugeordneten Rollenbahn 14 bzw. 22 aufnehmen und in eine darüber liegende Ebene anheben können. In dieser Ebene können die Werktücke 2 auf den Aushebeelementen 16 bzw. 24 bereitgehalten werden, damit die Hubeinrichtung 40 Werktücke aufnehmen oder ablegen kann. Alternativ ist es ebenso möglich, dass die Aushebeelemente 16 bzw. 24 die Werkstücke 2 nur vorübergehend anheben, bis ein oder mehrere Werkstücke darunter hindurch passiert sind und anschließend die auf den Aushebeelementen 16 bzw. 24 liegenden Werkstücke wieder aus der zugeordneten Rollenbahn 14, 22 abzulegen.

## Patentansprüche

1. Speichervorrichtung (1) für bevorzugt plattenförmige Werkstücke (2), umfassend:
eine Einfördereinrichtung (10) zum Einfördern und Bereithalten von Werkstücken (2),
eine Ausfördereinrichtung (20) zum Ausfördern von Werkstücken (20),
eine Speichereinrichtung (30), die eine Mehrzahl von auf unterschiedlichen Ebenen angeordneten Speicherabschnitten (32) aufweist, und
eine Hubeinrichtung (40) zum Bewegen von Werkstücken (2) zwischen der Einfördereinrichtung (10) und der Speichereinrichtung (30) sowie zwischen der Speichereinrichtung (30) und der Ausfördereinrichtung (20),
**dadurch gekennzeichnet, dass**
die Einfördereinrichtung (10) mindestens zwei Einförderebenen (12, 14, 16) aufweist, auf denen sie Werkstücke (2) einfördern und/oder bereithalten kann.

2. Speichervorrichtung nach Anspruch 1, **dadurch gekennzeichnet, dass** die Einfördereinrichtung (10) mindestens zwei Einförderflächentransporte (12, 14) aufweist, die bevorzugt unabhängig voneinander betrieben werden können.

3. Speichervorrichtung nach Anspruch 2, **dadurch gekennzeichnet, dass** sie ferner eine Weicheneinheit (18) aufweist, die eingerichtet ist, von einer vorgelagerten Fördereinrichtung (4) kommende Werkstücke (2) einem der Einförderflächentransporte (12, 14) zuzufördern.

4. Speichervorrichtung nach einem der vorhergehenden Ansprüche, **dadurch gekennzeichnet, dass** die Einfördereinrichtung (10) mindestens ein Aushebeelement (16) aufweist, das eingerichtet ist, mindestens ein Werkstück (2) von einer ersten Einförderebene (12) anzuheben und in einer zweiten Einförderebene (16) bereitzuhalten.

5. Speichervorrichtung nach einem der vorhergehenden Ansprüche, **dadurch gekennzeichnet, dass** die Hubeinrichtung (40) eine Mehrzahl von Hubelementen (42) aufweist, die gemeinsam oder einzeln eine Werkstückbewegung zwischen der Einfördereinrichtung (10) und der Speichereinrichtung (30) sowie zwischen der Speichereinrichtung (30) und der Ausfördereinrichtung (20) ausführen können.

6. Speichervorrichtung nach Anspruch 5, **dadurch gekennzeichnet, dass** mehrere Hubelemente (42) an einem gemeinsamen Schlitten (44) angeordnet sind, der bevorzugt vertikal verfahrbar ist.

7. Speichervorrichtung nach Anspruch 5 oder 6, **dadurch gekennzeichnet, dass** sie eine Mehrzahl von Schlitten (44) jeweils mit einer Mehrzahl von Hubelementen (42) aufweist.

8. Speichervorrichtung nach Anspruch 7, **dadurch gekennzeichnet, dass** die Hubelemente (42) mehrerer Schlitten (44) auch synchron arbeiten können, um gemeinsam ein Werkstück (2) aufzunehmen.

9. Speichervorrichtung nach einem der Ansprüche 5 bis 8, **dadurch gekennzeichnet, dass** die Hubelemente (42) einzeln oder gruppenweise ansteuerbar, insbesondere schwenkbar sind.

10. Speichervorrichtung nach einem der vorhergehenden Ansprüche, **dadurch gekennzeichnet, dass** die Speichereinrichtung (30) mehrere nebeneinander angeordnete Module (30') aufweist, wobei jedem Modul mindestens ein Hubelement (42) zugeordnet ist.

11. Verfahren zum Speichern und Sortieren von Werkstücken (2) unter Einsatz einer Speichervorrichtung (1) nach einem der vorhergehenden Ansprüche, mit den Schritten:
Bereitstellen einer Mehrzahl von Werkstücken (2), die zumindest teilweise unterschiedliche Attribute aufweisen,
Festlegen einer gewünschten Sortierreihenfolge der Werkstücke (2),
Einfördern der Werkstücke (2) jeweils auf eine Einförderebene (12, 14, 16) der Einfördereinrichtung (10) unter Berücksichtigung der gewünschten Sortierreihenfolge,
Umsetzen der Werkstücke (2) von der Einfördereinrichtung (10) in die Speichereinrichtung (30) derart, dass die Werkstücke (2) zumindest gruppenweise in der gewünschten Sortierreihenfolge abgelegt sind,
Umsetzen der Werkstücke (2) von der Speichereinrichtung (10) in die Ausfördereinrichtung (20) derart, dass die Werkstücke (2) in der gewünschten Sortierreihenfolge angeordnet sind.

12. Verfahren nach Anspruch 11, **dadurch gekennzeichnet, dass** die Werkstücke (2) gruppenweise von der Einfördereinrichtung (10) in die Speichereinrichtung (30) und/oder von der Speichereinrichtung (30) in die Ausfördereinrichtung (20) umgesetzt werden.
